(19) Europäisches Patentamt
European Patent Office
Office européen des brevets

(11) EP 0 958 312 B1

(12) EUROPÄISCHE PATENTSCHRIFT

(45) Veröffentlichungstag und Bekanntmachung des Hinweises auf die Patenterteilung:
**10.04.2002 Patentblatt 2002/15**

(21) Anmeldenummer: **98907952.0**

(22) Anmeldetag: **17.01.1998**

(51) Int Cl.[7]: **C08F 10/10**, C08F 4/20, C08F 4/24

(86) Internationale Anmeldenummer:
**PCT/EP98/00240**

(87) Internationale Veröffentlichungsnummer:
**WO 98/34966 (13.08.1998 Gazette 1998/32)**

# (54) VERFAHREN ZUR HERSTELLUNG VON HALOGENFREIEM, REAKTIVEM POLYISOBUTEN

METHOD FOR PRODUCING HALOGEN-FREE REACTIVE POLYISOBUTENE

PROCEDE DE PREPARATION DE POLYISOBUTENE REACTIF EXEMPT D'HALOGENE

(84) Benannte Vertragsstaaten:
**BE DE ES FI FR GB IT NL SE**

(30) Priorität: **06.02.1997 DE 19704482**

(43) Veröffentlichungstag der Anmeldung:
**24.11.1999 Patentblatt 1999/47**

(73) Patentinhaber: **BASF AKTIENGESELLSCHAFT**
**67056 Ludwigshafen (DE)**

(72) Erfinder:
- **SIGWART, Christoph**
  **D-69198 Schriesheim (DE)**
- **NARBESHUBER, Thomas**
  **D-67069 Ludwigshafen (DE)**
- **ELLER, Karsten**
  **D-67061 Ludwigshafen (DE)**
- **BARL, Manfred**
  **D-67304 Eisenberg (DE)**
- **FISCHER, Rolf**
  **D-69121 Heidelberg (DE)**
- **GEHRER, Eugen**
  **D-67069 Ludwigshafen (DE)**

(56) Entgegenhaltungen:
**DE-A- 19 528 942** **US-A- 3 405 191**
**US-A- 5 710 225**

- **KHODAKOV, YU. S. ET AL: "Oligomerization of isobutylene on oxides. 1. Catalytic properties of alumina- tungsten catalysts" IZV. AKAD. NAUK SSSR, SER. KHIM. (1981), (8), 1724-8 CODEN: IASKA6;ISSN: 0002-3353, 1981, XP002067583**
- **PATENT ABSTRACTS OF JAPAN vol. 006, no. 015 (C-089), 28.Januar 1982 -& JP 56 139429 A (NIPPON OIL & FATS CO LTD), 30.Oktober 1981, in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von halogenfreiem, reaktivem Polyisobuten mit einem Gehalt an endständigen Doppelbindungen von mehr als 50 mol-% und einem mittleren Molekulargewicht $M_n$ von 280 bis 10000 Dalton durch die kationische Polymerisation von Isobuten oder Isobuten-haltigen Kohlenwasserstoffgemischen in flüssiger Phase.

Bei der Isobutenpolymerisation bildet sich ein untrennbares Gemisch aus Polyisobutenen mit unterschiedlicher Position der Doppelbindung in den einzelnen Polyisobutenen. Polyisobutene der Formel I

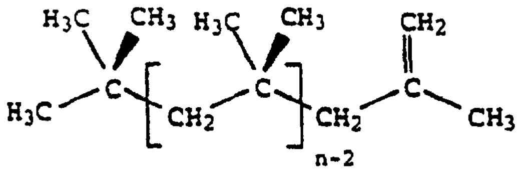

I,

in der n den Polymerisationsgrad angibt, der sich wiederum aus dem mittleren Molekulargewicht $M_n$ des hergestellten Polyisobutens ergibt, enthalten endständige C-C-Doppelbindungen vom Vinylidentyp, die in dieser Anmeldung aufgrund ihrer Stellung im Polyisobutenmolekül auch als α-olefinische Doppelbindungen bezeichnet werden. Dementsprechend werden die Doppelbindungen in Polyisobutenen der Formel II

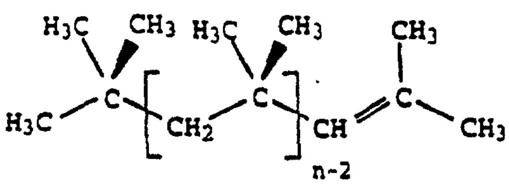

II

als β-olefinisch bezeichnet. Werden bei der Polymerisation von Isobuten keine besonderen Maßnahmen ergriffen, so entsteht ein statistisches Gemisch aus Polyisobutenen mit α-olefinischen, also endständigen, β-olefinischen und weiter im Inneren des Polyisobutenmoleküls gelegenen Doppelbindungen. Der Gehalt eines nach einem bestimmten Herstellverfahren hergestellten Polyisobuten-Produkts an endständigen Doppelbindungen als auch der Gehalt an β-olefinischen Doppelbindungen wird in mol-% angegeben.

Polyisobutene mit Molekulargewichten von bis zu 100000 Dalton sind bekannt. Die Herstellung dieser Olefine, die beispielsweise in H. Güterbock, Polyisobutylene und Mischpolymerisate, S. 77-104, Springer Verlag, Berlin, 1959, beschrieben ist, erfolgt üblicherweise durch Lewissäure-katalysierte Isobutenpolymerisation, wobei als Lewis-Säuren Aluminiumchlorid, Alkylaluminiumchlorid oder Bortrifluorid eingesetzt werden. Die hierbei erhaltenen Polymere weisen jedoch mit weniger als 10 mol-% einen relativ geringen Gehalt an endständigen C-C-Doppelbindungen vom Vinyliden-Typ auf.

Dagegen besitzt reaktives Polyisobuten (PIB) mit Molekulargewichten von üblicherweise 500 bis 5000 Dalton einen hohen Gehalt an endständigen Vinylidengruppen, bevorzugt von mehr als 50 mol-%. Diese reaktiven Polyisobutene werden als Zwischenprodukte zur Herstellung von Schmiermittel- und Kraftstoff-Additiven, wie sie beispielsweise in DE-A 27 02 604 beschrieben sind, verwendet. Zur Herstellung dieser Additive wird Polyisobuten zunächst mit Maleinsäureanhydrid umgesetzt. Dabei reagieren bevorzugt die endständigen Doppelbindungen vom Vinyliden-Typ, wohingegen Doppelbindungen, die sich weiter im Inneren des Makromoleküls befinden, je nach Stellung im Molekül in geringerem Maße oder gar nicht reagieren. Die gebildeten Polyisobuten-Maleinsäureanhydrid-Addukte werden anschließend durch Reaktion mit bestimmten Aminen in die entsprechenden Additive überführt. Ein hoher Anteil an endständigen Doppelbindungen ist daher für Polyisobutene, die als Ausgangsstoffe für die oben genannten Additive eingesetzt werden, unbedingt erforderlich. Ähnliches gilt für die Herstellung der ebenfalls als Kraftstoffadditive verwendeten Polyisobutenamine gemäß EP-A 244 616, die durch Hydroformylierung des reaktiven Polyisobutens und anschließende reduktive Aminierung des dabei erhaltenen Polyisobutenaldehyds erzeugt werden. Hierbei wird ebenfalls Polyisobuten mit einem hohen Gehalt an endständigen Doppelbindungen bevorzugt eingesetzt, doch werden bei der Hydroformylierung mit Kobaltkatalysatoren, aufgrund von deren Doppelbindungsisomerisierungsaktivität, auch β-olefinische Polyisobutene zum gewünschten Produkt hydroformyliert.

Die Herstellung von reaktivem Polyisobuten durch die homogenkata-lytische Polymerisation von Isobuten ist bereits bekannt. Beispielsweise wird gemäß DE-A 27 02 604 durch Umsetzung von Isobuten in Gegenwart von Bortrifluorid ein Polyisobuten-Produkt erhalten, welches einen Gehalt an endständigen Doppelbindungen von bis zu 88 % aufweist. EP-A 145 235 lehrt die Polymerisation von Isobuten in Gegenwart eines Komplexes aus Bortrifluorid und einem primären Alkohol in einem Temperaturbereich von -100°C bis +50°C, wobei Produkte mit ähnlich hohen Vinylidendoppelbindungs-Gehalten erhalten werden. Mit Komplexen aus Bortrifluorid und sekundären Alkoholen als Katalysator kann nach US-A 5 286 823 ebenfalls hochreaktives Polyisobuten hergestellt werden.

Nachteilig an diesen homogen katalysierten Verfahren ist, daß die verwendeten Lewis-Säure-Katalysatoren korrosiv sind und die Gefahr besteht, daß neben dem gewünschten, reaktiven Polyisobuten halogenierte, polymere Nebenprodukte entstehen, die praktisch nicht vom PIB abtrennbar sind und sich nachteilig auf die Produkt- und Weiterverarbeitungseigenschaften des PIB auswirken. Die Abtrennung des Homogenkatalysators erfolgt bei diesen Verfahren üblicherweise durch Quenchung mit einem Nucleophil, wodurch der Katalysator zerstört wird, und anschließende extraktive Abtrennung des PIB aus der Quenchmischung. Diese zusätzlichen Aufarbeitungsschritte stellen einen weiteren Nachteil des homogen katalysierten Verfahrens zur Herstellung von PIB dar.

WO 94/28036 betrifft u.a. die Herstellung von Polyisobuten mit Hilfe heterogener Lewis-Säure-artiger Katalysatoren. Als solche werden im Reaktionsmedium unlösliche Salze von Elementen aus der III., IV., V. und VI. Nebengruppe des Periodensystems der Elemente eingesetzt, vorzugsweise deren Halogenide, Sulfate, Perchlorate, Trifluormethansulfonate, Nitrate und Fluorsulfonate. In den Beispielen dieser Anmeldung werden allein die Halogenide dieser Elemente als Katalysatoren für die Isobutenpolymerisation eingesetzt. Eine Angabe über die Eigenschaften des in diesen Beispielen erhaltenen Polyisobutens wird weder hinsichtlich des Molekulargewichtes noch hinsichtlich des Gehalts an endständigen Doppelbindungen gemacht. Zum Abbruch der Polymerisation wird das Reaktionsmedium mit methanolischer Ammoniaklösung versetzt, wodurch die betreffenden Katalysatoren zerstört oder zumindest in erheblichem Maße inaktiviert werden.

Die Herstellung von PIB mit Hilfe heterogener Katalysatoren ist ebenfalls bekannt. US-A 4 288 649 beschreibt Verfahren zur Herstellung von Polyisobuten eines mittleren Molekulargewichts von > 1250 Dalton durch die Polymerisation von Isobuten-haltigen $C_4$-Kohlenwasserstoffgemischen an halogenierten Aluminiumoxid-Katalysatoren. Diese Katalysatoren werden durch die Behandlung des Aluminiumoxids mit einem Halogenierungsmittel, vorzugsweise mit einem Chlorierungsmittel, insbesondere mit Tetrachlorkohlenstoff, bei erhöhter Temperatur hergestellt. Dieses Verfahren hat den Nachteil, daß ein Teil des Chlors vom Katalysator auf das sich bildende Polymer übertragen wird. Beispielsweise führt die Polymerisation einer Mischung von n-Butan, Isobutan und Isobuten an einem solchermaßen hergestellten, chlorierten Aluminiumoxid-Katalysator nach 2 Stunden Reaktionszeit zu einem Polyisobuten-Produkt mit einem Chlorgehalt von 46 ppm.

US-A 5 326 920 betrifft ein Verfahren zur Isobutenpolymerisation, in dem ein oxidisches Trägermaterial, vorzugsweise Siliciumdioxid, das mit einem daran gebundenen Metallchlorid, vorzugsweise einem Aluminiumchlorid, aktiviert worden ist, als Heterogenkatalysator verwendet wird. Besonders bevorzugt wird nach dieser Schrift ein $SiO_2$-$AlCl_2$-Katalysator verwendet, in dem $AlCl_2$-Gruppen über Sauerstoffbrücken am $SiO_2$-Träger verankert sind. Nachteilig an diesem Verfahren ist, daß die erhaltenen Polyisobuten-Produkte eine extrem breite Molekulargewichtsverteilung D von 8 bis 14 haben, ihr Gehalt an endständigen Doppelbindungen gering ist und ihr Chlorgehalt im ppm-Bereich liegt. Außerdem ist bei diesem Verfahren die Anwesenheit von Promotoren, wie Wasser, Alkoholen, Alkylhalogeniden oder Chlorwasserstoff, erforderlich, damit eine für den technischen Betrieb hinreichende Katalysatoraktivität erzielt wird. Ähnliche Katalysatorsysteme werden in WO 95/26815, WO 95/26816, WO 95/26814 und WO 96/26818 für die Isobutenpolymerisation beschrieben.

Nach JP-A 139 429/1981 werden Zirkoniumdioxid- und Molybdänoxidhaltige Heterogenkatalysatoren zur Herstellung von Isobutenoligomeren eines Molekulargewichts von weniger als 300 Dalton eingesetzt. Zur Erhöhung ihrer Aktivität kann diesen Katalysatoren noch Aluminiumfluorid zugemischt werden. Beispielsweise wird gemäß dieser Schrift bei der Umsetzung eines Isobuten-haltigen $C_4$-Schnitts (Zusammensetzung: 46 % Isobuten, 28 % 1-Buten, 8 % 2-Butene, 12 % n-Butan, 5 % Isobutan, 1 % 1,3-Buta-dien) bei 120°C an einem $MoO_3$-$ZrO_2$-Katalysator, eines Molybdängehalts von 13 Gew.-%, berechnet als $MoO_3$, eine Mischung aus Isobutenoligomeren erhalten, die zu 29 %, 49 % bzw. 19 % aus Di-, Tri- bzw. Tetraisobuten besteht.

35 NL-A 7 002 055 betrifft ein Verfahren zur Herstellung von Isobutenoligomeren in der Gasphase mit einem Zinnoxid/Molybdänoxid auf Siliciumdioxid-Katalysator. Hierbei wird ein Gemisch aus Dimeren, Trimeren und Tetrameren des Isobutens erhalten.

EP-A 535 516 betrifft einen Katalysator zur Herstellung von Ethylenpolymeren, der Chromtrioxid auf einem speziellen $SiO_2$-Trägermaterial enthält. Eine Lehre zur Herstellung von reaktivem, niedermolekularem Polyisobuten wird in dieser Schrift nicht gegeben.

In GB-A 1 115 521 wird u.a. die Polymerisation von Isobuten an einem mit einer Platin-Verbindung beladenen Na-X-Zeolithen beschrieben. Dabei entstehen im wesentlichen Dimere und Trimere des Isobutens neben geringeren Mengen an Tetrameren und höheren Polymeren. Über das Molekulargewicht der so erzeugten höheren Polymere und deren Gehalt an endständigen Doppelbindungen werden keine Angaben gemacht.

Die unveröffentlichte Anmeldung PCT/EP 96/03441 betrifft ein Verfahren zur Herstellung von niedermolekularem, reaktivem und halogenfreiem Polyisobuten, bei dem als Katalysator ein mit verschiedenen Promotoren dotiertes Trägermaterial aus einer sauerstoffhaltigen Verbindung des Zirkoniums eingesetzt wird.

Der vorliegenden Erfindung lag deshalb die Aufgabe zugrunde, ein Verfahren zur Herstellung halogenfreien, reaktiven Polyisobutens mit einem Gehalt an endständigen Doppelbindungen von mehr als 50 mol-%, einem Gehalt an endständigen und β-olefinischen Doppelbindungen von mehr als 80 mol-% und einem mittleren Molekulargewicht von 280 bis 10000 Dalton mit Hilfe eines Heterogenkatalysators zu finden. Ferner sollten zur Durchführung dieses Verfahrens geeignete Heterogenkatalysatoren gefunden werden, mit denen das Verfahren zur Polyisobutenherstellung wirtschaftlich betrieben werden kann.

Dementsprechend wurde ein Verfahren zur Herstellung von halogenfreiem, reaktivem Polyisobuten mit einem Gehalt an endständigen Doppelbindungen von mehr als 50 mol% und einem mittleren Molekulargewicht $M_n$ von 280 bis 10000 Dalton durch die kationische Polymerisation von Isobuten oder Isobuten-haltigen Kohlenwasserstoffgemischen in flüssiger Phase gefunden, das dadurch gekennzeichnet ist, daß man die Polymerisation bei einer Temperatur von -30°C bis +40°C in Gegenwart eines heterogenen Polymerisationskatalysators aus einem oder mehreren der Oxide der Elemente der V. und VI. Nebengruppe des Periodensystems der Elemente oder in Gegenwart eines heterogenen Polymerisationskatalysators, der eine oder mehrere oxidische Verbindungen eines oder mehrerer der Elemente der V. und VI. Nebengruppe des Periodensystems der Elemente auf einem von einer sauerstoffhaltigen Zirkoniumverbindung ver-schiedenen, nicht-zeolithischen oxidischen Trägermaterial enthält, durchführt, wobei der Katalysator keine technisch wirksamen Mengen an Halogen enthält.

Im Unterschied zu den undotierten Oxiden der einzelnen Träger-materialien, die als Katalysator für die Polymerisation von Isobuten praktisch inaktiv sind oder nur eine sehr geringe katalytische Aktivität haben, haben die erfindungsgemäß anzuwendenden Katalysatoren eine gute bis sehr gute Aktivität und Selektivität für die Polymerisation von Isobuten zu reaktivem, niedermolekularem Polyisobuten mit einem Gehalt an endständigen Doppelbindungen von mehr als 50 mol-% und einem mittleren Molekulargewicht von 280 bis 10000 Dalton. Da den erfindungsgemäß anzuwendenden Katalysatoren zur Erzielung einer hohen Aktivität und Selektivität keine halogenierten Verbindungen zugesetzt werden müssen, ermöglichen sie die wirtschaftliche Herstellung von halogenfreiem PIB.

Sowohl die Herstellungsweise der erfindungsgemäß anzuwendenden Katalysatoren als auch die chemischen und physikalischen Analysedaten dieser Katalysatoren deuten darauf hin, daß der überwiegende Teil des in diesen Katalysatoren enthaltenen Trägermaterials in Form von oxidischen Verbindungen der einzelnen Trägerkomponenten vorliegt, weshalb zur Vereinfachung in dieser Anmeldung von oxidischem Trägermaterial oder von den individuellen Oxiden dieser Trägermaterialien bzw. der Trägerkomponenten aus denen das Trägermaterial zusammengesetzt ist, gesprochen wird. Zeolithe oder Materialien mit Zeolith-ähnlichen Eigenschaften, wie Siliciumaluminiumphosphate (SAPOS), silikatische mesoporöse Materialien oder Tonerden, wie Bentonite, Montmorillonite, Kaolin, die in dieser Anmeldung unter der Sammelbezeichnung "zeolithische Materialien" zusammengefaßt werden, gelten nicht als oxidische Trägermaterialien im Sinne dieser Anmeldung.

Als Polymerisationskatalysatoren werden im erfindungsgemäßen Verfahren heterogene Katalysatoren, die sauerstoffhaltige Verbindungen von einem oder mehreren Elementen der V. und/oder VI. Nebengruppe des Periodensystems der Elemente als katalytisch aktive Komponenten enthalten, verwendet. Die erfindungsgemäß einsetzbaren Katalysatoren können in zwei Katalysatortypen untergliedert werden. Bei den Katalysatoren, des Typs (A) handelt es sich um sogenannte Vollkatalysatoren, also Katalysatoren, die aus Oxiden eines oder mehrerer der Elemente der V. und/oder VI. Nebengruppe des Periodensystems der Elemente zusammengesetzt sind und keine oder praktisch keine Trägermaterialien enthalten. Die Katalysatoren des Typs (B) gehören zur Klasse der Trägerkatalysatoren und enthalten als katalytisch aktive Komponente oder Komponenten eine oder mehrere oxidische Verbindungen von einem oder mehreren Elementen aus der V. und/oder VI. Nebengruppe des Periodensystems der Elemente, die auf einem von sauerstoffhaltigen Zirkoniumverbindungen verschiedenen, oxidischen Trägermaterial aufgebracht sind, wobei diese Trägerkatalysatoren keine technisch wirksamen Mengen an Halogen enthalten. Diese katalytisch aktiven Komponenten werden hierin auch als Promotoren bezeichnet.

Als Katalysatoren des Typs (A) werden vorteilhaft die Oxide des Chroms, Molybdäns, Wolframs, Vanadiums, Niobs oder Tantals oder Gemische zweier oder mehrerer dieser Oxide, als Pulver oder zu Formkörpern, wie Strängen, Kugeln, Ringen oder Spiralen verformt, eingesetzt. Bevorzugte Katalysatoren des Typs (A) sind die Oxide des Chroms, Molybdäns, Wolframs und Vanadiums oder Mischungen zweier oder mehrerer dieser Oxide oder Mischungen eines oder mehrerer dieser Oxide mit Nioboxid ($Nb_2O_5$) oder Tantaloxid ($Ta_2O_5$). Von den verschiedenen Oxiden unterschiedlicher Oxidationsstufe, die die Elemente der V. und VI. Nebengruppe bilden können, werden Chrom ( IV) oxid ($CrO_2$), Chrom(III)oxid ($Cr_2O_3$), Molybdän(VI)oxid ($MoO_3$), Wolfram(VI)oxid ($WO_3$), Vanadiumpentoxid ($V_2O_5$), Niobpentoxid ($Nb_2O_5$) und Tantalpentoxid ($Ta_2O_5$) als Katalysatoren für das erfindungsgemäße Verfahren bevorzugt. Diese Oxide können auf an sich herkömmliche Weise, beispielsweise durch Glühen in sauerstoffhaltiger Atmosphäre von z.B. Ammoniumchromat ($(NH_4)_2CrO_4$), Ammoniummolybdat ($(NH_4)_2MoO_4$), Ammoniumwolframat ($(NH_4)_2WO_4$), Ammoniumvanadat ($NH_4VO_3$), Ammoniumniobat ($NH_4NbO_3$) oder Ammoniumtantalat ($NH_4TaO_3$) hergestellt werden. Als Folge dieser Herstellungsweise können die so erzeugten Oxide auch noch geringe Mengen von Oxiden niedrigerer oder

gegebenenfalls höherer Oxidationsstufe dieser Elemente enthalten.

Als oxidische Trägermaterialien für die Katalysatoren des Typs (3) sind die festen, hitzebeständigen Oxide der Elemente der II., III. und IV. Hauptgruppe des Periodensystems der Elemente und der Elemente der I., II., III., IV. (ausgenommen Zirkonium), VII. und VIII. Nebengruppe geeignet, wobei bei den Elementen der III. Nebengruppe die Seltenerdmetalle eingeschlossen sind. Wie hierin an anderer Stelle noch näher erläutert werden wird, können diese Oxide im Trägermaterial herstellungsbedingt als konkrete Oxide stöchiometrischer Zusammensetzung, in Form nichtstöchiometrischer oxidischer Verbindungen, in Form gemischtvalentiger Oxide oder, im Falle der Verwendung eines mehrere Elemente der vorgenannten Gruppen des Periodensystems enthaltenden Trägermaterials, als Mischoxide der betreffenden Elemente vorliegen, wobei, wiederum als Folge der Herstellungsweise, der betreffende Träger einzelne dieser Oxidformen praktisch ausschließlich enthalten kann, die verschiedenen Oxidformen aber auch nebeneinander in einem Träger vorliegen können. Unter "hitzebeständige Oxide" werden im Sinne dieser Anmeldung solche der vorgenannten Oxidformen verstanden, die sich unter den für die Herstellung der einzelnen Katalysatoren angewandten, individuellen Calcinierungsbedingungen bilden oder beständig sind.

Von den Oxiden der II. Hauptgruppe des Periodensystems werden z.B. die Oxide des Berylliums, Magnesiums und Calciums bevorzugt als Trägermaterial verwendet. Die Oxide des Bors, Aluminiums und Galliums sind bevorzugte Trägermaterialien aus der III. Hauptgruppe. Geeignete Trägermaterialien aus der IV. Hauptgruppe sind die Oxide des Siliciums, Germaniums, Zinns und Bleis, wobei die Oxide des Siliciums ($SiO_2$), Zinns und Bleis bevorzugt sind und von den verschiedenen Oxiden des Zinns und Bleis insbesondere Zinndioxid ($SnO_2$), Blei(II)oxid (PbO), Bleidioxid ($PbO_2$) und Mennige ($Pb_3O_4$) als Trägermaterial bevorzugt werden.

Auch die Oxide der Elemente der I. Nebengruppe des Periodensystems sind geeignete Trägermaterialien für die erfindungsgemäß anwendbaren Katalysatoren, bevorzugt werden jedoch die Oxide des Kupfers verwendet und hiervon insbesondere das Kupfer(II)oxid (CuO). Das bevorzugte oxidische Trägermaterial aus der II. Nebengruppe des Periodensystems ist Zinkoxid (ZnO). Von den Oxiden der IV. Nebengruppe des Periodensystems sind Titandioxid ($TiO_2$) und Hafniumdioxid ($HfO_2$) als Trägermateralien geeignet, wobei Titandioxid bevorzugt wird. Von den Oxiden der VII. Nebengruppe des Periodensystems werden die Oxide des Mangans bevorzugt als Trägermaterial verwendet, besonders bevorzugt das Mangandioxid ($MnO_2$) sowie das Mangan (III) oxid ($Mn_2O_3$) und von den Oxiden der Elemente der VIII. Nebengruppe sind die Oxide des Eisens, Nickels und Kobalts bevorzugte Trägermaterialien, insbesondere die Oxide des Eisens $Fe_2O_3$ und $Fe_3O_4$.

Die Oxide der Elemente der III. Nebengruppe des Periodensystems einschließlich der Seltenerdmetalle können allesamt vorteilhaft als Trägermaterial für die erfindungsgemäß anwendbaren Katalysatoren verwendet werden, wobei Scandiumoxid ($Sc_2O_3$), Yttriumoxid ($Y_2O_3$), Lanthanoxid ($La_2O_3$), Cer(III)oxid ($Ce_2O_3$), Samarium(III)oxid ($Sm_2O_3$) und Ytterbiumoxid ($Yb_2O_3$) bevorzugt sind.

Besonders bevorzugte Trägermaterialien für die erfindungsgemäß anzuwendenden Katalysatoren sind Bortrioxid, Aluminiumoxide, Lan-thanoxide, Titanoxide, Siliciumdioxide, Bleioxide und Eisenoxide, einschließlich ihrer verschiedenen Kristallmodifikationen, insbesondere Eisen(III)oxid ($Fe_2O_3$) und $SiO_2$. Es können vorteilhaft auch Mischungen zweier oder mehrerer dieser oxidischen Trägermaterialien als Träger für die erfindungsgemäß anzuwendenden Katalysatoren dienen.

Die erfindungsgemäß anzuwendenden Trägerkatalysatoren können auf verschiedenerlei Weise nach an sich herkömmlichen Methoden hergestellt werden, beispielsweise durch Tränken oder Imprägnieren des Trägermaterials mit einer Lösung einer Vorläuferverbindung, vorzugsweise einer wäßrigen Lösung, des oder der betreffenden Promotoren, wobei im Falle der Dotierung des Trägers mit mehreren Promotoren, diese gemeinsam in einem oder einzeln, sukzessive, in mehreren Tränkschritten auf das Trägermaterial aufgebracht werden können, durch gemeinsame Fällung der Vorläuferverbindungen des Trägermaterials und des Promotors oder durch Cosolvatation, d.h. durch gemeinsames Auflösen dieser Vorläuferverbindungen in einem Lösungsmittel, vorzugsweise Wasser, und Eindampfen der so erhaltenen Lösung, und anschließende Trocknung und Calcinierung der so erhaltenen Feststoffe zu den erfindungsgemäß anwendbaren Katalysatoren.

Bei der Herstellung der Katalysatoren durch Imprägnierung oder Tränkung wird entweder das vorgefertigte Trägermaterial, d.h. das betreffende Oxid oder eine Kischung mehrerer der geeigneten D Oxide, oder eine im betreffenden Lösungsmittel schwer lösliche, durch thermische Behandlung in das Trägermaterial überführbare Vorläuferverbindung des Trägermaterials, z.B. ein Hydroxid, Carbonat, Nitrat oder ein organisches Salz der Trägerkomponente, mit einer Lösung, vorzugsweise einer wäßrigen Lösung, einer Vorläuferverbindung des betreffenden Promotors oder der betreffenden Promotoren bei einer Temperatur von im allgemeinen 20 bis 80°C imprägniert, das so imprägnierte Trägermaterial oder die Vorläuferverbindung des Trägermaterials getrocknet und das imprägnierte und getrocknete Trägermaterial oder dessen Vorläuferverbindung anschließend bei Temperaturen calciniert, bei denen die Promotorvorläuferverbindung und gegebenenfalls die Vorläuferverbindung des Trägermaterials zum katalytisch aktiven Promotor bzw. zum oxidischen Trägermaterial zersetzt und der fertige Katalysator gebildet wird.

Bei Herstellung der erfindungsgemäßen Katalysatoren durch Fällung von Vorläuferverbindungen des Trägermaterials und/oder des Promotors kann eine herkömmliche Fällungsmethode angewandt werden. Bei der herkömmlichen Fällungsmethode werden im allgemeinen Lösungen von wasserlöslichen Salzen der Trägerkomponente und/oder des Promotors durch Zusatz eines Fällungsmittels gefällt. Als Fällungsmittel werden z.B. Basen, wie Alkalimetallhydroxide und -carbonate oder wäßrige Ammoniaklösungen eingesetzt, die mit den betreffenden Salzen der Trägerkomponente schwerlösliche Verbindungen eingehen. Bevorzugt werden Alkalimetallcarbonate als Fällungsmittel verwendet. Die Wahl der betreffenden Base richtet sich nach den im Einzelfall zu fällenden Elementen der Trägerkomponente. Je nach Art der zu fällenden Trägerkomponente kann es dabei erforderlich sein, die Fällung unter pH-Wert-Kontrolle in einem bestimmten pH-Wert -Bereich durchzuführen, da manche der als Trägerkomponente geeigneten Elemente amphotere Eigenschaften besitzen und/oder mit dem Fällungsmittel lösliche Komplexverbindungen bilden können. Es versteht sich von selbst, daß je nach Art der zu fällenden Trägerkomponente oder Promotorvorläuferverbindung auch andere Fällungsmittel als die vorgenannten Basen verwendet werden können, wenn die Anionen dieser Fällungsmittel mit den betreffenden Elementen der Trägerkomponente bzw. der Promotorvorläuferverbindung schwerlösliche Verbindungen eingehen können. Beispielsweise ist es möglich, Lösungen wasserlöslicher Salze von Elementen der Trägerkomponente, z.B. Alkalimetallsilikate wie Wasserglas oder Alkalimetallborate wie Borax zur Fällung der betreffenden Promotorvorläuferverbindung einzusetzen, wobei es im allgemeinen vorteilhaft ist, eine solche Fällung in einem bestimmten pH-Bereich auszuführen. Die auf diese Weise erhaltenen Niederschläge werden zweckmäßigerweise von der Flüssigkeit abgetrennt, salzfrei gewaschen und nach Trocknung calciniert.

Es kann auch vorteilhaft sein, nur die Trägerkomponente nach einer der vorgenannten Methoden in einer Fällungsreaktion zu fällen und den so erhaltenen Vorläufer des Trägermaterials z.B. mit einem Oxid oder einer Vorläuferverbindung des Promotors zu vermischen, zu trocknen und anschließend zum Katalysator zu calcinieren. Ebenso ist es möglich, die Promotorvorläuferverbindung auf das im Fällungsgefäß vorgelegte Trägermaterial aufzufällen und die erhaltene Masse, wie zuvor beschrieben, zum Katalysator weiterzuverarbeiten. Besonders vorteilhaft werden die Vorläuferverbindungen des Trägermaterials und des Promotors in getrennten Fällungen gefällt, die erhaltenen Niederschläge z.B. in einem Kneter oder Extruder vermischt und dann auf analoge Weise in den Katalysator umgewandelt werden.

Anstatt durch Fällung können die erfindungsgemäß anzuwendenden Katalysatoren auch durch gemeinsame Lösung (Cosolvatation) von Vorläuferverbindungen des Trägermaterials und des Promotors, Eindampfen dieser Lösung, Trocknung und Calcinierung des erhaltenen Rückstandes erzeugt werden.

Außer durch die vorstehend beschriebenen naßchemischen Methoden können die Vorläuferverbindungen der Promotoren auch z.B. durch Gasphasenabscheidung der Promotorelemente oder von Verbindungen der Promotorelemente oder durch Flammspritzen auf dem Trägermaterial oder einer Vorläuferverbindung des Trägermaterials abgeschieden werden. Nach Calcinierung in sauerstoffhaltiger Atmosphäre werden dann die erfindungsgemäß anzuwendenden Katalysatoren erhalten.

Die Trocknung der durch Imprägnierung, Fällung oder Cosolvatation erhaltenen Katalysatorvorläufer erfolgt im allgemeinen bei 50°C bis 300°C, vorzugsweise bei 60°C bis 200°C und besonders bevorzugt bei 70°C bis 150°C. Die Trocknung kann gewünschtenfalls beschleunigt oder die Trocknungstemperatur unter die angegebenen Werte abgesenkt werden, wenn die Trocknung unter vermindertem Druck durchgeführt wird.

Die Calcinierung der getrockneten Katalysatorvorläufer bzw. der mittels Gasphasenabscheidung oder Flammspritzen erhaltenen Katalysatorvorläufer wird im allgemeinen in oxidierender Atmosphäre, insbesondere in Gegenwart sauerstoffhaltiger Gase, vorzugsweise an der Luft, vorgenommen. Die Calcinierungstemperatur beträgt im allgemeinen mehr als 300°C bis 1000°C, vorzugsweise mehr als 300°C bis 800°C, besonders bevorzugt mehr als 300°C bis 700°C. Je nach Art, Herstellungsweise und Zusammensetzung des betreffenden Katalysatorvorläufers beträgt die Calcinierungsdauer im allgemeinen 1 bis 20 Stunden.

Bei der Calcinierung in oxidierender Atmosphäre werden die bei der jeweils im Einzelfall angewandten Herstellmethode - Imprägnierung, Fällung, Cosolvatation, Gasphasenabscheidung oder Flammspritzen - erhaltener, getrockneten Katalysatorvorläufer in die Katalysatoren umgewandelt, wobei die darin enthaltenen Vorläuferverbindungen des Trägermaterials und/oder des Promotors zu den entsprechenden oxidischen Verbindungen thermisch zersetzt oder oxidiert werden. Im Falle der Anwendung der Methode der Imprägnierung kann es sich bei den Vorläuferverbindungen z.B. um thermisch oder oxidativ zersetzbare Salze, im Falle der Anwendung der Fällungsmethode z.B. um schwerlösliche Hydroxide, Carbonate, basische Salze, Oxidhydroxide, Silikate oder Borate, und im Falle der Anwendung der Methoden der Gasphasenabscheidung oder des Flammspritzens z.B. um die betreffenden oxidierbaren Elemente handeln. Unter den angewandten Calcinierungsbedingungen werden, je nach Art, Zusammensetzung und Herstellungsweise des Katalysatorvorläufers, thermisch oder oxidativ zersetzbare Salze, z.B. zu den betreffenden Oxiden, gemischtvalentigen Oxiden und/oder Mischoxiden zersetzt, die bei der Fällung erhaltenen, dann getrockneten Niederschläge z.B. zu den betreffenden stöchiometrischen oder nichtstöchiometrischen oxidischen Verbindungen, gemischtvalentigen Oxiden und/oder Mischoxiden umgewandelt und die durch Gasphasenabscheidung auf dem Trägermaterial oder einem Trägermaterialvorläufer abgeschieden Elemente zu den entsprechenden Oxiden oxidiert. Im Zuge der Calcinierung kann es weiterhin zu Folgereaktionen kommen, bei denen z.B. zunächst aus dem Promotorvorläufer gebildete Oxide mit dem oxidischen Trägermaterial in einer Festkörperreaktion zu Mischoxiden reagieren oder an der

Katalysatoroberfläche befindliche, relativ hoch oxidierte Promotorverbindungen oder Trägerkomponenten sich mit im Inneren des Katalysatorpartikels befindlichen, relativ niedrig oxidierten Promotor- oder Trägerkomponenten in einer Festkörperreaktion zu gemischtvalentigen oder nichtstöchiometrischen Oxiden umsetzen. Demzufolge können je nach Art und Zusammensetzung der Träger- und Promotorkomponenten und deren Vorläufer, der Herstellungsweise des Katalysatorvorläufers und den angewandten Calcinierungsbedingungen im fertigen Katalysator einzelne der vorstehend beschriebenen Oxidformen die anderen Oxidformen überwiegen oder verschiedene dieser Oxidformen nebeneinander vorliegen.

Es versteht sich daher von selbst, daß die Calcinierungsbedingungen für jeden einzelnen Katalysator in Abhängigkeit von seiner Zusammensetzung, von der Art und Weise wie die Promotorelemente auf das Trägermaterial oder dessen Vorläufer aufgebracht worden sind und von der Art der hierzu verwendeten Verbindungen der promotoraktiven Elemente eingestellt werden muß, wenn damit optimale Ergebnisse im erfindungsgemäßen Verfahren erzielt werden sollen. Die individuelle Einstellung dieser Calcinierungsbedingungen im Rahmen der angegebenen Calcinierungstemperaturen und Calcinierungszeit ist fur den Fachmann auf einfache Weise in wenigen Routineversuchen zu bewerkstelligen.

Die vorstehend vorgestellten Herstellungsmethoden für die Katalysatoren stellen lediglich eine beispielhafte Aufzählung dar und können gewünschtenfalls variiert werden. Welche der vorgenannten Methoden zur Herstellung der Katalysatoren des Typs (B) angewandt wird, ist im allgemeinen für die Wirksamkeit dieser Katalysatoren im erfindungsgemäßen Verfahren nicht kritisch. Die Auswahl eines bestimmten Herstellungsverfahrens richtet sich im allgemeinen nach der Verfügbarkeit bestimmter Ausgangsmaterialien für die betreffenden Promotoren und Trägermaterialien, der Verfügbarkeit der für die einzelnen Herstellungsverfahren erforderlichen Apparate, der Zusammensetzung der gewünschten Katalysatoren und dem aus Lehrbüchern bekannten chemischen Ver-halten der zur Herstellung der einzelnen Katalysatoren verfügbaren Ausgangsmateriallen unter den Bedingungen der verschiedenen Herstellmethoden.

Außer ihrer Elementarzusammensetzung ist die genaue chemische Struktur der erfindungsgemäß anzuwendenden Katalysatoren aus den zuvor genannten Gründen praktisch unbekannt. Möglicherweise bilden die als Promotoren wirksamen Elemente aus der V. und/oder VI.

Nebengruppe des Periodensystems mit dem oxidischen Trägermaterial Mischoxide oder gemischtvalente Oxide, die katalytisch aktive Zentren ausbilden und so die Isobutenpolymerisation katalysieren, möglicherweise sind die als Promotoren wirksamen Elemente an die Oberfläche des Trägermaterials durch chemische Bindungen, beispielsweise über Sauerstoffbrücken gebunden und bewirken auf diese Weise die katalytische Aktivität der dotierten Trägermaterialien, die ohne eine solche Dotierung im erfindungsgemäßen Verfahren praktisch keine katalytische Aktivität entfalten. Somit kann auch keine konkrete Aussage über die Wirkungsweise dieser Katalysatoren gemacht werden: Manche der erfindungsgemäß anwendbaren Katalysatoren erweisen sich bei der Bestimmung ihrer Acidität durch Hammett-Titration als starke Säuren, andere wiederum erweisen sich bei dieser Titrationsmethode als praktisch neutral und katalysieren dennoch die Isobutenpolymerisation unter Ausbildung des gewünschten hohen Gehalts an endständigen Doppelbindungen.

Da die genaue chemische Struktur der erfindungsgemäß anzuwendenden Katalysatoren nicht näher bekannt ist, wird zum Zwecke der Charakterisierung der einzelnen Katalysatoren, deren Gehalt an Trägerelementen und Promotorelementen in Gew.-%, berechnet als das betreffende Trägerelement bzw. das betreffende Promotorelement, bezogen auf das Gesamtgewicht des calcinierten Katalysators angegeben. Der Rest zu 100 Gew.-% wird größtenteils vom an diese Elemente gebundenen Sauerstoff beigetragen, aber auch von herstellungsbedingt in den Katalysator gelangten, technisch unwirksamen Verunreinigungen, z.B. Alkalimetallverbindungen. Auch Wasserstoff kann in chemisch gebundener Form, z.B. in Form von OH-Gruppen oder in Form von selbst unter den Calcinierungsbedingungen nicht entfernbarem Kristallwasser, in den erfindungsgemäß anzuwendenden Katalysatoren nach deren Calcinierung vorliegen.

Im allgemeinen beträgt das Molverhältnis des oder der Trägerele-mente, berechnet als die Summe der jeweiligen Trägerelemente, zu dem im Katalysator vorliegenden als Fromotor wirksamen Element oder, kumulativ, zu den im Katalysator vorliegenden, als Promotor wirksamen Elementen, jeweils berechnet als das betreffende Element, Trägerelement/Promotorelement, 50:50 bis 99,9:0,1, vorzugs-weise 54:46 bis 99,7:0,3 und besonders bevorzugt 80: 20 bis 98:2. Alkalimetalle, wenn, dann üblicherweise in Form sauerstoffhaltiger Alkalimetaliverbindungen im Katalysator vorliegend, können herstellungsbedingt in Mengen von bis zu 1 Gew.-%, z.B. 0,1 bis 1 Gew.-%, im Katalysator vorhanden sein, jeweils berechnet als Alkalimetall. Die Alkalimetalle können z.B. durch die Verwendung alkalimetallhaltiger Fällungsmittel oder durch Alkalimetallverunreinigungen oder -bestandteile der zur Promotierung verwendeten Verbindungen der promotorwirksamen Elemente bzw. der zur Herstellung des Trägermaterials verwendeten Vorläuferverbindungen in den Katalysator eingeschleppt werden.

Die erfindungsgemäß anzuwendenden Polymerisationskatalysatoren sind im allgemeinen und bevorzugt halogenfrei. Je nach Art ihrer Herstellung, insbesondere abhängig vom Halogengehalt der zu ihrer Herstellung verwendeten Rohstoffe, können diese Katalysatoren jedoch mit durch diese Rohstoffe technisch unvermeidlich eingeschleppten, technisch jedoch unwirksamen Mengen an Halogen verunreinigt sein, die weder einen Promotoreffekt entfalten noch zur Bildung von halogeniertem Polyisobuten führen. Ursache für die technische Unwirksamkeit solcher unerwünschter Halogenverunreinigungen in den erfindungsgemäß anzuwendenden Katalysatoren ist, daß diese Verunreinigungen unspezifisch über den Katalysator verteilt sind und nicht Bestandteil der katalytisch aktiven Zentren sind. Dies unterscheidet die erfindungsgemäß anzuwendenden Katalysatoren unter anderem von den halogenhaltigen Katalysatoren gemäß US-A 4 288 649 oder US-A 5 326 920, in denen Halogene zielgerichtet in die katalytisch aktiven Zentren des Katalysators eingebaut werden. Der Gehalt an technisch unvermeidbaren Halogenverunreinigungen in den erfindungsgemäß anzuwendenden Katalysatoren beträgt im allgemeinen weniger als 1000 Gew.-ppm, vorzugsweise weniger als 100 Gew.-ppm Halogen, jeweils bezogen auf das Gesamtgewicht des calcinierten Katalysators, besonders bevorzugt werden halogenfreie Katalysatoren eingesetzt.

Manche der erfindungegemäß anzuwendenden Katalysatoren sind bekannt, beispielsweise einzelne der in EP-A 535 516 beschriebe-nen Chrom auf Siliciumdioxid-Katalysatoren, die bislang nur in Verfahren zur Ethylen-Polymerisation eingesetzt worden sind.

Die erfindungsgemäß anzuwendenden Katalysatoren werden zweckmäßigerweise vor ihrem Einsatz im erfindungsgemäßen Verfahren kondi-tioniert, d.h. sie werden auf an sich herkömmliche Weise zu Formkörpern, wie Tabletten, Kugeln, Zylindern, Ringen oder Spiralen, verformt oder zu Splitt zerkleinert und in dieser Form vorzugsweise in einer Festbettanordnung im Feaktor eingesetzt, oder sie werden zu Pulver vermahlen und in dieser Form, vorteilhaft als Suspensionskatalysatoren, verwendet.

Die erfindungsgemäß anzuwendenden Katalysatoren können praktisch unbeschränkt, vorzugsweise unter Ausschluß von Feuchtigkeit, gelagert werden. Feucht gewordene Katalysatoren werden vorteil-haft vor ihrer Verwendung im erfindungsgemäßen Verfahren bei Atmosphärendruck oder unter vermindertem Druck getrocknet - bei Atmosphärendruck im allgemeinen bei Temperäturen oberhalb 150°C, vorzugsweise bei 180 bis 300°C, bei vermindertem Druck kann die Trocknung selbstverständlich auch bei tieferen Temperaturen erfolgen.

Als Ausgangsmaterial können im erfindungsgemäßen Verfahren sowohl Reinisobuten als auch Isobutenhaltige Kohlenwasserstoffgemische, wie $C_4$-Raffinat oder Isobutan-/Isobuten-Gemische aus der Isobutandehydrierung, verwendet werden. Als $C_4$-Raffinat werden Kohlenwasserstoffgemische bezeichnet, die durch weitgehende, d. h. bis auf Spuren, Entfernung des 1,3-Butadiens, beispielsweise durch Extraktivdestillation, aus dem $C_4$-Schnitt von Steamcrackern oder FCC-Crackern (FCC: Fluid Catalyzed Cracking) erhalten worden sind (vgl. Weissermel, Arpe: Industrielle Organische Chemie, S. 69, 102-103, 2. Auflage, Verlag Chemie 1978).

Das erfindungsgemäße Verfahren kann diskontinuierlich oder kontinuierlich bei Temperaturen von im allgemeinen -30°C bis +40°C, vorzugsweise von -25 bis +30°C und besonders bevorzugt von -20°C bis +20°C, unter Atmosphärendruck oder erhöhtem Druck, insbesondere unter dem Eigendruck des Reaktionssystems, durchgeführt werden, so daß das Isobuten flüssig bleibt. Dabei können an sich herkömmliche Reaktoren, wie Rührreaktoren oder Schlaufenreaktoren bei der diskontinuierlichen, oder Schlaufenreaktoren, Reaktorkaskaden bei der kontinuierlichen Betriebsweise des Verfahrens eingesetzt werden. Desgleichen können in Sumpf- oder Rieselfahrweise betriebene Rohrreaktoren oder Rohrreaktorkaskaden beim kontinuierlichen Betrieb des erfindungsgemäßen Verfahrens vorteilhaft verwendet werden. Die erfindungsgemäß anzuwendenden Katalysatoren können dabei, vorzugsweise bei Verwendung von Schlaufenreaktoren oder Ronrreaktoren, in einem Festbett angeordnet sein oder in Form vom Pulver im Reaktionsmedium suspendiert werden. Die Isobutenpolymerisation kann in An- oder Abwesenheit eines vorzugsweise unpolaren, halogenfreien Lösungsmittels, vorzugsweise Kohlenwasserstoffen, vorgenommen werden, bei Verwendung von Isobuten-haltigen Kohlenwasserstoffgemischen als Ausgangsmaterial wirken die darin außer den Isobuten zusätzlich enthaltenen Kohlenwasserstoffe als Lösungs- oder Verdünnungsmittel. Da die Isobutenpolymerisation exotherm ist, kann es vorteilhaft sein, die verwendeten Reaktoren mit Vorrichtungen zur Innen- oder Außenkühlung auszustazten.

Die Einstellung des gewünschten mittleren Molekulargewichts $M_n$ des Polyisobutens kann im erfindungsgemäßen Verfahren durch die Variation der Reaktionsparameter bewirkt werden.

Im diskontinuierlichen Verfahren erfolgt diese Einstellung des mittleren Molekulargewichts $M_n$ im allgemeinen durch die Variation der eingesetzten Katalysatormenge, der Reaktionszeit und der Reaktionstemperatur. Die Reaktionszeit beträgt in Abhängigkeit von der eingesetzten Katalysatormenge im allgemeinen 0,01 bis 10 Stunden, vorzugsweise 0,1 bis 8 Stunden. Der Katalysator wird bei der diskontinuierlichen Ausgestaltung des erfindungsgemäßen Verfahrens im allgemeinen in einer Menge von 0,1 bis 50 Gew.-%, vorzugsweise 0,5 bis 20 Gew.-% und besonders bevorzugt von 1 bis 10 Gew.-%, jeweils bezogen auf das Gewicht des im eingesetzten Ausgangsmaterial enthaltenen Isobutens, zugesetzt. Zweckmäßigerweise werden je nach eingesetztem Katalysator und Ausgangsmaterial die optimalen Polymerisationsbedingungen für die Herstellung von Polyisobuten eines gewünschten mittleren Molekulargewichts $M_n$ in Vorversuchen ermittelt. Bei der kontinuierlichen Betriebsweise des erfindungsgemäßen Verfahrens erfolgt die Einstellung des mittleren Molekulargewichts $M_n$ entsprechend, statt der eingesetzten Katalysatormenge werden hierbei jedoch die Reaktionsparameter Katalysatorbelastung und Verweilzeit variiert.

Die Isolierung des Polyisobutens aus der Polymerisationsmischung birgt im allgemeinen keine verfahrenstechnischen Besonderheiten und kann, bei Verwendung eines suspendierten Katalysators nach dessen Abtrennung, beispielsweise durch Filtration, Zentrifugation oder Dekantieren, destillativ erfolgen, wobei zweckmäßigerweise zunächst leichtflüchtige Bestandteile der Polymerisationsmischung, wie nichtumgesetztes Isobuten, im Ausgangsmaterial enchaltene oder als Lösungsmittel zugesetzte Kohlenwasserstoffe, abdestilliert und anschließend höhersiedende Neben-produkte, beispielsweise niedermolekulare Isobutenoligomere, vom Polyisobuten destillativ abgetrennt werden.

Das erfindungsgemäße Verfahren ermöglicht die wirtschaftliche Herstellung von reaktivem, halogenfreiem Polyisobuten eines mittleren Molekulargewichts $M_n$ von im allgemeinen 280 bis 10000 Dalton, vorzugsweise 400 bis 6C00 Dalton und besonders bevorzugt von 500 bis 5000 Dalton und einem Gehalt an endständigen Doppelbindungen von mehr als 50 mol-%.

Beispiele

I. Herstellung der Katalysatoren

Die Katalysatoren A bis L wurden in Form von Pulver hergestellt und eingesetzt.

Die Gehalte der einzelnen Katalysatoren an Mo, W, Si, Pb, La, Fe und V wurden mittels Röntgenfluoreszenzanalyse (Lit. R. Bock: Methoden der Analytischen Chemie; Band 2: Nachweis- und Bestimmungsmethoden Teile 1, Verlag Chemie, Weinheim 1980), die Gehalte der einzelnen Katalysatoren an B, Cr und Ti wurden mittels ICP (Inductively Coupled Plasma)-Atomemissionsspektroskopie (Lit. A. Montaser; D. W. Golightly: Inductively Coupled Plasmas in Analytical Atomic Spectrometry; 2nd Ed., VCH Verlagsgesellschaft, Weinheim) und die Gehalte der einzelnen Katalysatoren an Cl und S wurden mit Hilfe der Schömiger-Methode und durch Verbrennungsanalyse (Lit.: F. Ehrenberger: Quantitative organische Elementaranalyse; VCH Verlagsgesellschaft, Weinheim 1991) bestimmt. Vor der Bestimmung dieser Elemente wurden die calcinierten Katalysatoren nochmals bis zur Gewichtskonstanz getrocknet und in dieser Form unmittelbar der Analyse zugeführt.

Katalysator A: 50 g Ammoniumheptamolybdat-Tetrahydrat ($(NH_4)_6Mo_7O_{24}\cdot 4H_2O$) wurde 5 h bei 500°C an Luft calciniert. Der Katalysator hatte nach der Calcinierung einen Mo-Gehalt von 66,0 Gew.-%.

Katalysator B: In einen 1l-Kolben wurden 50 g $SiO_2$ (Aerosil® 200 der Fa. Degussa, Hanau) vorgelegt und mit einer Lösung bestehend aus 51,42 g Ammoniumheptamolybdat-Tetrahydrat ($(NH_4)_6MO_7O_{24}\cdot 4H_2O$) und 700 ml Wasser versetzt. Die Suspension wurde 30 min. am Rotationsverdampfer gedreht. Danach wurde das überschüssige Wasser bei 60°C abgezogen. Das so erhaltene Material wurde 16 h bei 150°C vorgetrocknet und 16 h bei 500°C an Luft calciniert. Der Katalysator hatte nach der Calcinierung folgende Mo- und Si-Gehalte:

| | |
|---|---|
| Mo | 26,0 Gew.-% |
| Si | 28,5 Gew.-% |

Katalysator C: Eine Mischung aus 39 g $(NH_4)_6Mo_7O_{24}\cdot 4H_2O$ in 100 g Wasser und 142 g FeOOH wurde 90 min geknetet und danach 12 h bei 120°C getrocknet. Nach Zermahlen wurde 2 h bei 500°C calciniert. Der Katalysator hatte nach der Calcinierung folgende Mo- und Fe-Gehalte:

| | |
|---|---|
| Mo | 13,6 Gew.-% |
| Fe | 54,0 Gew.-% |

Katalysator D: In einen 1l-Kolben wurden 50 g $Pb(NO_3)_2$ vorgelegt und mit einer Lösung bestehend aus 37,31 g $(NH_4)_6Mo_7O_{24}\cdot 4H_2O$ und 250 ml Wasser versetzt. Die Suspension wurde 30 min. am Rotationsverdampfer gedreht. Danach wurde das überschüssige Wasser bei 60°C abgezogen. Das so erhaltene Material wurde 16 h bei 150°C vorgetrocknet und 16 h bei 500°C an Luft calciniert. Der Katalysator hatte nach der Calcinierung folgende Mo- und Pb-Gehalte:

| | |
|---|---|
| Mo | 31,5 Gew.-% |
| Pb | 49,0 Gew.-% |

Katalysator E: In einen 1l-Kolben wurden 88,3 g $La(NO_3)_3\cdot 6H_2O$ vorgelegt und mit einer Lösung bestehend aus 12,6 g $(NH_4)_6Mo_7O_{24}\cdot 4H_2O$ und 400 ml Wasser versetzt. Die Suspension wurde 30 min. am Rotationsverdampfer gedreht. Danach wurde das überschüssige Wasser bei 60°C abgezogen. Das so erhaltene Material wurde 16 h bei 150°C vorgetrocknet und 16 h bei 500°C an Luft calciniert. Der Katalysator hatte nach der Calcinierung folgende Mo-

und La-Gehalte:

| | |
|---|---|
| Mo | 17,7 Gew.-% |
| La | 47,5 Gew.-% |

Katalysator F: In einen 1l-Kolben wurden 50 g Borsäure vorgelegt und mit einer Lösung bestehend aus 199,88 g Ammoniumheptamolybdat-Tetrahydrat ($(NH_4)_6Mo_7O_{24}\cdot 4H_2O$) und 600 ml Wasser versetzt. Die Suspension wurde 30 min. am Rotationsverdampfer gedreht. Danach wurde vorgetrocknet und 16 h bei 500°C an Luft calciniert. Der Katalysator hatte nach der Calcinierung folgende Mo- und B-Gehalte:

| | |
|---|---|
| Mo | 55,0 Gew.-% |
| B | 4,1 Gew.-% |

Katalysator G: In einen 1l-Kolben wurden 50 g Eisen(II)sulfat-Heptahydrat vorgelegt und mit einer Lösung bestehend aus 2,83 g $VCl_3$ und 250 ml Wasser versetzt. Die Lösung wurde 30 min. am Rotationsverdampfer gedreht. Danach wurde das überschüssige Wasser bei 60°C abgezogen. Das so erhaltene Material wurde 16 h bei 150°C vorgetrocknet und 16 h bei 500°C an Luft calciniert. Der Katalysator hatte nach der Calcinierung folgende Gehalte an Fe, V, Cl und S:

| | |
|---|---|
| Fe | 29,8 Gew.-% |
| V | 5,4 Gew.-% |
| Cl | 0,001 Gew.-% |
| S | 16,0 Gew.-% |

Katalysator H: Eine Mischung von 20 g Wolframsäure ($H_2WO_4$) in 80 g 32 %iger $NH_3$-Lösung wurde mit 84 g FeOOH 90 min. geknetet und danach 12 h bei 120°C getrocknet. Nach Zermahlen wurde 2 h bei 300°C calciniert. Der Katalysator hatte nach der Calcinierung folgende W- und Fe-Gehalte:

| | |
|---|---|
| W | 15,5 Gew.-% |
| Fe | 56,0 Gew.-% |

Katalysator I: 150 g Titandioxid wurden mit 37,5 g $CrO_2$ in 160 g Wasser 120 min. geknetet und damach 12 h bei 120°C getrocknet. Nach Zermahlen wurde erste 2 h bei 350°C und dann 2 h bei 650°C calciniert. Der Katalysator hatte nach der Calcinierung folgende Cr- und Ti-Gehalte:

| | |
|---|---|
| Cr | 13,2 Gew.-% |
| Ti | 46,0 Gew.-% |

Katalysator J: 120 g Ti $(OH)_4$ wurden mit 16,8 g Molybdänsäure $H_2MoO_4$ und 100 ml Wasser im Kneter homogenisiert, bei 100°C getrocknet und bei 500°C 5 h unter Luft calciniert. Nach der Calcinierung enthielt der Katalysator :

| | |
|---|---|
| Mo | 10,0 Gew.-% |
| Ti | 51,0 Gew.-% |

Katalysator K: 120 g $Ti(OH)_4$ wurden mit 15,3 g $H_2WO_4$ und 100 ml Wasser im Kneter homogenisiert, bei 110°C getrocknet und bei 700°C 5 h unter Luft calciniert. Nach der Calcinierung enthielt der Katalysator:

| | |
|---|---|
| W | 12,0 Gew.-% |
| Ti | 51,0 Gew.-% |

Katalysator L:

120 g $Ti(OH)_4$ wurden mit 94,1 g wäßriger Vanadiumoxalatlösung (V-Gehalt: 5 mol-%, berechnet als $V_2O_5$)

und 20 ml Wasser in einem Kneter homogenisiert, bei 110°C getrocknet und bei 500°C 5 h calciniert. Nach der Calcinierung hatte der Katalysator die folgenden Ti- und V-Gehalte:

| | |
|---|---|
| Ti | 32,0 Gew.-% |
| V | 7,7 Gew.-% |

II. Polymerisation von Isobuten

Das Zahlenmittel des Molekulargewichts $M_n$, hierin auch als mittleres Molekulargewicht $M_n$ bezeichnet, wurde mittels Gelpermeationschromatographie (GPC) bestimmt, wobei standardisierte Polyisobutene als Eichsubstanzen verwendet wurden. Das Zahlenmittel $M_n$ wurde aus den erhaltenen GPC-Chromatcgrammen nach der Gleichung

$$M_n = \Sigma c_i / \Sigma (c_i / M_i)$$

berechnet, wobei $c_i$ für die Konzentration der einzelnen Polymerspezies im erhaltenen Polymergemisch und $M_i$ für das Molekulargewicht der einzelnen Polymerspezies i steht. Die Molekulargewichtsverteilung, auch Dispersität (D) genannt, wurde aus dem Verhältnis des Gewichtsmittels ($M_w$) und des Zahlenmittels ($M_n$) nach der Gleichung

$$D = M_w / M_n$$

bestimmt, wobei das Gewichtsmittel $M_w$ aus den erhaltenen GPC-Chromatogrammen nach folgender Gleichung ermittelt wurde:

$$M_w = \Sigma c_i M_i / \Sigma c_i$$

Der α- und β-Olefin-Gehalt (Formel I und II) wurde $^{13}C$-NMRspektroskopisch bestimmt.

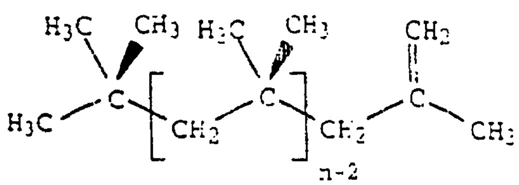

I

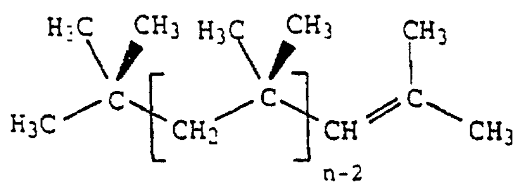

II

Die C-Atome der endständigen Doppelbindung der α-Olefine I zeigen im $^{13}C$-NMR-Spektrum Signale bei einer chemischen Verschiebung von 114,4 ppm ($CH_2$) und 143,6 ppm (C). Die Signale der C-Atome der trisubstituierten Doppelbindung der β-Olefine II liegen im $^{13}C$-NMR-Spektrum bei 127,9 (= $\underline{C}$H-R) und 135,4 ppm (= $\underline{C}(CH_3)_2$). Durch Auswertung der Signalflächen und Vergleich mit den Signalflächen der übrigen olefinischen C-Atome kann der Gehalt an α- und β-Olefin bestimmt werden. Als Lösungsmittel diente deuteriertes Chlorofom ($CDCl_3$) und als interner Standard Tetramethylsilan.

Beispiel 1

In ein 25 ml Druckgefäß aus Glas wurden unter Argon bei -70°C 10 g Isobuten einkondensiert. Nach Zugabe von 1 g Katalysator A, der zuvor nochmals bei 180°C/0,3 mbar getrocknet worden war, wurde das Gefäß verschlossen und die Suspension 2 h bei 0°C unter dem Eigendruck des Reaktionssystems gerührt. Danach wurde die Polymerisationsmischung bei 0°C mit 10 g n-Hexan verdünnt. Nichtumgesetztes Isobuten wurde bei Raumtemparatur abgedampft, der Katalysator abfiltriert und das zugesetzte Lösungsmittel bei Raumtemperatur und unter langsamer Absenkung des Drucks bis auf 0,3 mbar vom Filtrat abdestilliert. Niedermolekulare Isobutenoligomere wurden vom erhaltenen Polyisobuten durch Kugelrohrdestillation bei 120°C/0,3 mbar abgetrennt. Das in einer Ausbeute von 11 % erhaltene, farblose Polyisobuten hatte ein mittleres Molekulargewicht $M_n$ von 3640 Dalton, eine Molekulargewichtsverteilung D

von 3,4 und einer Gehalt an endständigen Doppelbindungen (= α-Olefingehalt) von 75 mol-%. Der β-Olefingehalt betrug 26 mol-%.

Beispiele 2 bis 12

Die Beispiele 2 bis 12 wirden, wie in Beispiel 1 beschrieben, durchgeführt. Die mit den verschiedenen Katalysatoren und mit unterschiedlichen Katalysatormengen erhaltenen Ergebnisse dieser diskontinuierlichen Versuche sind in Tabelle 1 zusammengestellt.

Tabelle 1:

| Polymerisationsbedingungen: Polymerisationstemperatur: 0°C; Eigendruck; Polymerisationszeit: 2 h; Einsatzmenge: 10 g Isobuten | | | | | | | |
|---|---|---|---|---|---|---|---|
| Diskontinuierliche Isobutenpolymerisation | | | | | | | |
| Bsp. Nr. | Katalysator | Katalysatormenge | Ausbeute [1]) | S (I) [2]) | S (I+II) [3]) | $M_n$ | D |
| | | [g] | [%] | [mol-%] | [mol-%] | | |
| 2 | B | 0,6 | 13 | 76 | 86 | 2231 | 3,6 |
| 3 | C | 2,0 | 8 | 74 | 87 | 447 | 1,3 |
| 4 | D | 1,0 | 18 | 73 | 94 | 4246 | 2,2 |
| 5 | E | 1,0 | 3 | 65 | 85 | 5110 | 8,4 |
| 6 | F | 1,0 | 10 | 56 | 82 | 5294 | 2,5 |
| 7 | G | 1,4 | 5 | 78 | 91 | 1073 | 1,6 |
| 8 | H | 1,0 | 14 | 67 | 80 | 450 | 3,9 |
| 9 | I | 1,5 | 5 | 51 | 76 | 706 | 6,1 |
| 10 | J | 0,2 | 12 | 73 | 80 | 625 | 2,5 |
| 11 | K | 0,2 | 13 | 78 | 86 | 884 | 5,7 |
| 12 | L | 0,5 | 8 | 83 | 90 | 1126 | 4,6 |

[1]) Eindampfrückstand nach Kugelrohrdestillation (120°C/0.3 mbar) bezogen auf eingesetztes Isobuten
[2]) S(I) = Gehalt an endständigen Doppelbindungen = α-Olefin-gehalt
[3]) S(I+II) = Gehalt an endständigen Doppelbindungen + Gehalt an β-olefinischen Doppelbindungen

**Patentansprüche**

1. Verfahren zur Herstellung von halogenfreiem, reaktivem Polyisobuten mit einem Gehalt an endständigen Doppelbindungen von mehr als 50 mol% und einem mittleren Molekulargewicht $M_n$ von 280 bis 10000 Dalton durch die kationische Polymerisation von Isobuten oder Isobuten-haltigen Kohlenwasserstoffgemischen in flüssiger Phase, **dadurch gekennzeichnet, daß** man die Polymerisation bei einer Temperatur von -30°C bis +40°C in Gegenwart eines heterogenen Polymerisationskatalysator aus einem oder mehreren der Oxide der Elemente der V. und VI. Nebengruppe des Periodensystems der Elemente oder in Gegenwart eines heterogenen Polymerisationskatalysators, der eine oder mehrere oxidische Verbindungen eines oder mehrerer der Elemente der V. und VI. Nebengruppe des Periodensystems der Elemente auf einem von einer sauerstoffhaltigen Zirkoniumverbinding verschiedenen, nicht-zeolithischen oxidischen Trägermaterial enthält, durchführt, wobei der Katalysator keine technisch wirksamen Mengen an Halogen enthält.

2. Verfahren gemäß Anspruch 1, **dadurch gekennzeichnet, daß** man einen Katalysator verwendet, der als nicht-zeolithisches oxidisches Trägermaterial eine oder mehrere oxidische Verbindungen aus der Gruppe der Elemente der II., III. und IV. Hauptgruppe des Periodensystems der Elemente und/oder der I., II., III., IV., VII. und VIII. Nebengruppe des Periodensystems der Elemente enthält.

3. Verfahren gemäß den Ansprüchen 1 und 2, **dadurch gekennzeichnet, daß** man einen Katalysator verwendet, der eine oder mehrere oxidische Verbindungen des Vanadiums, Chroms, Molybdäns oder Wolframs enthält.

**4.** Verfahren gemäß den Ansprüchen 1 bis 3, **dadurch gekennzeichnet, daß** man einen Katalysator verwendet, der als Trägermaterial eine oder mehrere oxidische Verbindungen des Bors, Aluminiums, Siliciums, Bleis, Eisens, Titans oder Lanthans enthält.

**5.** Verfahren nach Anspruch 4, **dadurch gekennzeichnet, daß** man einen Katalysator verwendet, der als Trägermaterial eines oder mehrere der Oxide des Bors, Aluminiums, Siliciums, Bleis, Eisens, Titans oder Lanthans enthält.

## Claims

**1.** A process for preparing halogen-free, reactive polyisobutene having a terminal double bond content of more than 50 mol% and an average molecular weight $M_n$ of 280 - 10000 dalton by the cationic polymerization in the liquid phase of isobutene or hydrocarbon mixtures comprising isobutene, which comprises polymerizing at from -30°C to +40°C in the presence of a heterogeneous polymerization catalyst comprising one or more oxides of the elements of transition groups V and VI of the Periodic Table of the Elements or in the presence of a heterogeneous polymerization catalyst comprising one or more oxidic compounds of one or more elements of transition groups V and VI of the Periodic Table of the Elements supported on a non-zeolitic oxidic support material which is not an oxygen-containing zirconium compound, the catalyst not containing a technically effective amount of halogen.

**2.** A process as claimed in claim 1, wherein the catalyst used comprises, as non-zeolitic oxidic support material, one or more oxidic compounds selected from the group consisting of the elements of main groups II, III and IV of the Periodic Table of the Elements and/or of transition groups I, II, III, IV, VII and VIII of the Periodic Table of the Elements.

**3.** A process as claimed in claim 1 or 2, wherein the catalyst used comprises one or more oxidic compounds of vanadium, chromium, molybdenum or tungsten.

**4.** A process as claimed in any of claims 1 to 3, wherein the catalyst used comprises, as support material, one or more oxidic compounds of boron, aluminum, silicon, lead, iron, titanium or lanthanum.

**5.** A process as claimed in claim 4, wherein the catalyst used comprises, as support material, one or more oxides of boron, aluminum, silicon, lead, iron, titanium or lanthanum.

## Revendications

**1.** Procédé de production de polyisobutène réactif non halogéné, contenant plus de 50 % en moles de doubles liaisons en fin de chaîne, et doté d'une masse moléculaire moyenne en nombre $M_n$ allant de 280 à 10000 daltons, au moyen d'une polymérisation cationique de l'isobutène ou de mélanges hydrocarbonés en phase liquide contenant de l'isobutène, **caractérisé en ce que** l'on réalise la polymérisation à une température allant de -30°C à +40°C, en présence d'un catalyseur de polymérisation hétérogène choisi parmi un ou plusieurs oxydes des éléments du groupe Vb et VIb du Tableau Périodique des Eléments, ou en présence d'un catalyseur de polymérisation hétérogène contenant un ou plusieurs composés d'oxydation d'un ou plusieurs des éléments du groupe Vb et VIb du Tableau Périodique des Eléments, sur un support d'oxydation non zéolithique différent d'un composé du zirconium oxygéné, le catalyseur ne contenant pas d'halogène en quantité efficace sur le plan technique.

**2.** Procédé selon la revendication 1, **caractérisé en ce que** l'on met en oeuvre un catalyseur qui contient, en tant que support d'oxydation non zéolithique, un ou plusieurs composés d'oxydation choisis parmi les éléments des groupes II, III et IV du Tableau Périodique des Eléments et/ou des groupes Ib, IIb, IIIb, IVb, VIIb et VIII du Tableau Périodique des Eléments.

**3.** Procédé selon les revendications 1 et 2, **caractérisé en ce que** l'on met en oeuvre un catalyseur qui contient un ou plusieurs composés d'oxydation du vanadium, du chrome, du molybdène ou du tungstène.

**4.** Procédé selon les revendications 1 à 3, **caractérisé en ce que** l'on met en oeuvre un catalyseur qui contient, en tant que support, un ou plusieurs composés d'oxydation du bore, de l'aluminium, du silicium, du plomb, du fer, du titane ou du lanthane.

5. Procédé selon la revendication 4, **caractérisé en ce que** l'on met en oeuvre un catalyseur qui contient en tant que support un ou plusieurs oxydes du bore, de l'aluminium, du silicium, du plomb, du fer, du titane ou du lanthane.